# EUROPÄISCHE PATENTSCHRIFT

(11) **EP 2 032 416 B1**
(45) Veröffentlichungstag und Bekanntmachung des Hinweises auf die Patenterteilung: **30.12.2009**
(21) Anmeldenummer: 07764673.5
(22) Anmeldetag: 15.06.2007
(51) Int. Cl.: B62D 9/00, B62D 7/15

(54) **HINTERACHSLENKUNG FÜR EINEN FAHRZEUGKRAN**
REAR AXLE STEERING FOR A MOBILE CRANE
DIRECTION D'ESSIEU ARRIÈRE POUR GRUE AUTOMOTRICE

(30) Priorität: 23.06.2006 DE 102006028957
(43) Veröffentlichungstag der Anmeldung: 11.03.2009
(73) Patentinhaber: Terex Demag GmbH, 66482 Zweibrücken (DE)
(72) Erfinder: POHL, Klaus, 66606 St. Wendel (DE)
(74) Vertreter: Meissner, Peter E.
(86) Internationale Anmeldenummer: PCT/EP2007/005300
(87) Internationale Veröffentlichungsnummer: WO 2007/147526

(56) Entgegenhaltungen:
- DE-A1- 10 245 618
- DE-C1- 19 605 553

## Beschreibung

### TECHNISCHES GEBIET

Die vorliegende Erfindung betrifft eine Hinterachslenkung für einen Fahrzeugkran, der mindestens eine aktiv gelenkte Hinterachse mit daran angeordneten Rädern aufweist. Außerdem betrifft die Erfindung ein Verfahren zum Lenken einer durch ein hydraulisches Lenksystem aktiv gelenkten Hinterachse mit daran angeordneten Rädern eines Fahrzeugkrans, wenn ein Fehler im normalen Betrieb der Hinterachslenkung auftritt.

### HINTERGRUND DER ERFINDUNG

Heutzutage werden Fahrzeugkrane mit Teleskopausleger oder Gittermastausleger hergestellt, die aufgrund ihrer Größe oftmals drei oder mehr Achsen aufweisen, von denen dann meistens mindestens eine Hinterachse aktiv gelenkt wird.

So wird beispielsweise von der Firma Terex-Demag GmbH & Co. KG/Zweibrücken - Deutschland ein Fahrzeugkran unter der Bezeichnung AC 100 hergestellt und vertrieben, der ein Untergestell mit fünf Achsen aufweist, auf dem dann ein drehbarer Oberwagen mit einem ausfahrbaren Teleskopausleger montiert ist. Die beiden Vorderachsen dieses Fahrzeugkrans werden in üblicher Weise gelenkt, die erste Hinterachse ist starr und die letzten beiden Hinterachsen werden aktiv gelenkt.

Einer der großen Fahrzeugkrane mit Teleskopausleger, den die Terex-Demag GmbH & Co. KG/Zweibrücken - Deutschland herstellt und vertreibt ist der sogenannte AC 200-1 TP, der sieben Achsen besitzt, wovon die ersten zwei Vorderachsen gelenkt sind, die mittleren zwei im öffentlichen Straßenverkehr nicht gelenkt werden und die weiteren drei Hinterachsen wiederum aktiv gelenkt werden. Bei diesem Fahrzeugkran sind alle aktiv gelenkten Hinterachsen zur Vermeidung von Störungen durch einzelne separate Hinterachslenksysteme lenkbar. Die spurfiihrenden Vorderachsen werden üblicherweise über das Lenkrad, ein Lenkgetriebe mit hydraulischer Unterstützung und Lenkhebel in ihrer Winkelstellung, also dem Lenkwinkel, eingestellt.

An den aktiv angelenkten Hinterachsen wird die Kraft- und Lenkbewegung entweder über mechanische Hebel von der bzw. den mehreren Vorderachsen weitergeleitet, wie es bei dem zuerst genannten kleineren Fahrzeugkran der Fall ist, oder es wird eine elektronisch-hydraulische Anlenkung gewählt, wie es beispielsweise bei dem zuletzt genannten großen Fahrzeugkran AC 200-1 TP der Fall ist. Bei der elektronisch-hydraulischen Hinterachslenkung entfällt die mechanische Kopplung zu den Vorderachsen. Dadurch sind verschiedene Lenkgeometrien einfacher darstellbar. Beispielsweise ist es ohne weiteres möglich, eine Diagonalfahrt vorzunehmen, bei der alle Räder gleichsinnig gelenkt sind. Auch das Wegdrehen von einer Wand ist mit einer solchen mechanisch entkoppelten elektronisch-hydraulischen Hinterachslenkung durchführbar. Hier liegt die Lenklinie auf oder hinter der letzten Hinterachse. Zudem ist auch das Fahren von engsten Kurvenradien möglich, d.h. hier liegt die Lenklinie ca. in der Mitte des Fahrzeugs. Das freie Lenken, bei dem die aktiv lenkbaren Hinterachsen unabhängig von den Vorderachsen gelenkt werden können, ist mit entsprechenden zugeordneten Rechnersystemen mit solchen elektronisch-hydraulischen Hinterachssystemen ebenfalls ausführbar. Alle die genannten Lenksysteme arbeiten geschwindigkeitsabhängig. Dadurch wird bei langsamer Fahrt eine hohe Wendigkeit und bei schneller Fahrt ein stabiler Geradeauslauf erreicht.

Fahrzeugkrane der zuvor erläuterten Bauart bewegen sich nicht nur auf nicht öffentlichen Baustellen, sondern sie sind insbesondere auch für den öffentlichen Straßenverkehr zugelassen und entsprechend sind an die Sicherheit hohe Anforderungen zu stellen. Ein Fahrzeugkran der vorgenannten Art muss also auch im Fehlerfall sicher beherrschbar sein. Um die Sicherheit auch bei mehreren aktiven angelenkten Hinterachsen von Fahrzeugkranen zu gewährleisten, werden üblicherweise verschiedene Rückfallebenen definiert, die durch verschiedene Systemkonzepte erreicht werden können.

So ist beispielsweise ein sogenanntes Zentriersystem bekannt, bei dem im Fehlerfall die betroffene Hinterachse in eine Nullgrad-Stellung gefahren wird. Derartige hydraulische Zentriersysteme sind beispielsweise von der Firma Mobil Elektronik, Bössingerstraße 31-33, D-74243 Langenbrettach-Langenbeutingen erhältlich. Ein solches hydraulisches Zentriersystem ist beispielsweise auch in der DE 102 45 618 A1 beschrieben. Die darin offenbarte aktive Hinterachslenkung für einen Fahrzeugkran weist an der jeweiligen Hinterachse jeweils zwei hydraulische Lenkzylinder und einen hydraulischen Zentrierzylinder auf. Dem jeweiligen hydraulischen Zentrierzylinder sind Sicherheitsventile zugeordnet, die über ein Wegeventil derart ansteuerbar sind, dass sie im Fehlerfall schließen, so dass die Hinterachsen nicht weiter auslenkbar sind. Diesen Hinterachsen ist wiederum jeweils ein Sicherheitsventil zugeordnet, das bei vorgegebenen Fahrsituationen den Zentrierzylinder derart beaufschlagt, dass die zugehörige Hinterachse in die neutrale Stellung zurückführbar ist, während die Lenkzylinder nicht mehr in eine ausgelenkte Position hin beaufschlagt sind. Diese Ausgestaltung soll somit über die Zentrierzylinder dazu dienen, dass die zugehörige Hinterachse in die neutrale Stellung zurückführbar ist, wodurch ein Steuerrechner bei beibehaltenem Lenkeinschlag zunächst nur die erfindungsgemäß vorgesehenen Sperrventile schließt, so dass hier das Kurvenverhalten zu dem Zeitpunkt, zu dem der Fehler festgestellt wird, zunächst beibehalten wird. Bei Feststellen eines entsprechenden Ändems der Lenkbewegung in die andere Richtung ist dann das Sicherheitsventil derart tätig, dass die jeweilige gelenkte Hinterachse in die neutrale Stellung geführt wird und dort auch verbleibt, bis der Fehler behoben ist.

Im Übrigen ist anzumerken, dass eine Fahrzeughöchstgeschwindigkeit als diejenige Fahrsituation vorgesehen sein kann, in der die Hinterachsen in die neutrale Position zurückzuführen sind. Als übliche Fahrzeughöchstgeschwindigkeit, ab der die Hinterachsen in die neutrale Position angeordnet sein sollen, sind in diesem Fall 25 km/h bis 50 km/h anzusetzen. Somit kann die aktive Hinterradlenkung zum Manövrieren beim Einsatz des Fahrzeugkrans genutzt werden. Bei der Straßenfahrt ist aber sichergestellt, dass die lenkbaren Hinterachsen in neutraler Stellung stehen, um bei höheren Geschwindigkeiten einen stabilen Geradeauslauf zu erreichen.

Ein weiteres bekanntes Systemkonzept ist das sogenannte Sperrsystem. Hier wird im Fehlerfall die betroffene aktiv gelenkte Hinterachse in ihrer Position stehen gelassen. Bekannt ist das Sperrsystem der Firma Mobilelektronik, wie es auch beispielsweise in der später erläuterten beigefügten Zeichnung gezeigt ist.

Ein sogenanntes Freischaltsystem sieht vor, dass die aktiv gelenkte Hinterachse als Nachlaufachse ausgeführt ist und im Fehlerfall freigeschaltet wird, so dass sie dem Fahrzeug nachläuft. Dieses sogenannte Freischaltsystem ist beispielsweise auch in der genannten DE 102 45 618 A1 beschrieben.

Schließlich gibt es auch Kombinationen der vorgenannten Systeme, bei denen je nach Fehlerfall die betroffene aktiv gelenkte Hinterachse gesperrt oder zentriert oder freigeschaltet wird.

Eine solche Kombination ist beispielsweise in der DE 102 45 618 A1 beschrieben und die entsprechende Elektronik für ein solches System wird wiederum von der Firma Mobilelektronik bereitgestellt.

Alle vorgenannten Systeme sind sogenannte Fail Save Systeme. Ein Fail Operational System, bei dem es sich um ein redundantes System handelt, das im Fehlerfall weiterlenkt, ist wiederum von der Firma Mobilelektronik bekannt.

Die aktive Hinterachslenkung gemäß der zuvor beschriebenen DE 102 45 618 A1 ist dahingehend problematisch, dass der hydraulische Zentrierzylinder für jeweils eine aktiv gelenkte Hinterachse und die zugehörigen Hydraulikstellventile etc. teuer und aufwendig sind und entsprechend viel Platz benötigen.

In der DE 196 32 251 B4 ist eine Vorrichtung und ein Verfahren zur Lenkung eines Kraftfahrzeugs mit mindestens zwei lenkbaren Rädern gezeigt, welche eine Lenkeinrichtung zur Einstellung der Positionen der lenkbaren Räder in Abhängigkeit eines Lenksollsignals und einer Einrichtung zur Erzeugung eines Lenkverhaltens des Kraftfahrzeugs im Fehlerfall der Lenkeinrichtung aufweist. Die Einrichtung zur Erzeugung eines Lenkverhaltens ist eine vorhandene Brems einrichtung, welche im Fehlerfall der Lenkeinrichtung in Abhängigkeit des Lenksollsignals an den Rädern selektiv unterschiedliche Bremskräfte erzeugt. Wird ein Fehlerfall der Lenkeinrichtung von der Fehlererkennungseinrichtung erkannt, schaltet diese die Lenkeinrichtung ab. Gleichzeitig aktiviert sie die Bremseinrichtung über ein Steuersignal derart, dass die Räder selektiv mit Bremskräften in Abhängigkeit des Lenksollsignals beaufschlagt werden, um die von der durch den Fahrzeugführer bedienbaren Lenkvorgabeeinrichtung oder einer Einrichtung zum automatischen Führen des Kraftfahrzeuges kommandierten Lenkreaktionen zu gewährleisten.

Aus der DE 196 05 553 C1 ist ein Lenksystem für mehrspurige Kraftfahrzeuge bekannt. Dieses Lenksystem ist mit einem Notlenksystem ausgestattet, welches Radbremsen an unterschiedlichen Fahrzeugseiten in Abhängigkeit von der Betätigung einer Lenkhandhabe ungleich zu betätigen vermag. Wie bei der zuvor erläuterten DE 196 32 251 B4 wird auch hier nur darauf abgestellt, das gesamte Fahrzeug über die Bremseinrichtung dadurch zu lenken, dass insgesamt ein Giermoment aufgebracht wird.

Die DE 196 05 553 C1 offenbart ein Lenksystem für eine Vorderachse eines Fahrzeugs, bei dem Lenkräder einen hinreichenden Lenkrollradius aufweisen, so dass durch seitenweise unterschiedliche Ansteuerung zugehöriger Radbremsen eine Lenkwinkeländerung erzeugbar ist.

Der guten Ordnung halber sind noch die DE 10 2004 034 126 A1 und DE 10 2005 011 613 A1 zu nennen. Die DE 10 2004 034 126 A1 offenbart ein Straßenfahrzeug mit einem Steer-by-Wire-System. Dieses Steer-by-Wire-System weist ein manuell betätigbares Lenkelement, einen die Lenkposition des Lenkelements erfassenden Sensor und ein Steer-by-Wire-Element, das mit lenkbaren Rädern des Fahrzeugs zusammenwirkt, auf. Das Steer-by-Wire-System weist ferner ein elektronisches Stabilisierungsprogramm für das Fahrzeug, das in Wirkverbindung mit den Bremsen des Fahrzeugs bringbar ist, und einen Gierratensensor auf. Liegt eine Unplausibilität zwischen dem Sensor des Lenkelements und dem Gierratensensor vor, so ist in diesem System eine Rückfallebene des Steer-by-Wire-Systems wirksam, die die Funktion des elektronischen Stabilitätsprogramms nutzt, um eine Lenkbewegung des Fahrzeugs entsprechend der Lenkposition des Lenkelements zu erzeugen und das Fahrzeug zum Stillstand abzubremsen. Aus der DE 10 2005 011 613 A1 ist ein Regelungssystem für ein brems-lenk-assistiertes Parken bekannt. Dieses Regelungssystem soll aber nur bei Fahrzeugen mit zwei Achsen eine Vierradlenkung mit hoher Wendigkeit zum Einparken durch eine kostengünstigere Zweiradlenkung der Vorderachse kombiniert mit einer Bremslenkung der Hinterachse ersetzen.

### DARSTELLUNG DER ERFINDUNG

Das der Erfindung zugrunde liegende technische Problem besteht darin, eine verbesserte aktive Hinterachslenkung für einen Fahrzeugkran bereitzustellen.

Dieses technische Problem wird durch eine aktive Hinterachslenkung für einen Fahrzeugkran gelöst, der mindestens eine aktiv gelenkte Hinterachse mit Rädern aufweist. Ein hydraulisches Lenksystem der Hinterachslenkung umfasst mehrere Lenkzylinder, von denen jeweils eine bestimmte Anzahl einer aktiv gelenkten Hinterachse zugeordnet sind, um diese aktiv gelenkte Hinterachse in gewünschter Weise auszulenken. Außerdem ist ein Bremssystem vorhanden, das zum individuellen Anbremsen jedes Rades der zumindest einen aktiv gelenkten Hinterachse ausgebildet ist. Erfindungsgemäß ist nunmehr eine Steuerung vorhanden, die im Falle eines Fehlers, der den Lenkvorgang mittels dem hydraulischen Lenksystem der aktiv gelenkten Hinterachse beeinflusst, das Bremssystem so steuert, dass durch gezieltes Anbremsen zumindest eines Rades derjenigen aktiv gelenkten Hinterachse, die fehlerbehaftet ist, eine vorbestimmte gewünschte Lenkstellung eingenommen wird.

Der Erfindung liegt der Gedanke zugrunde, entweder ein bereits vorhandenes Bremssystem oder ein für diesen Zweck neu eingebautes Bremssystem einer aktiv gelenkten Hinterachse dazu zu verwenden, im Fehlerfall individuell die Räder anzubremsen, um gezielt die Hinterachse bzw. die daran angeordneten Räder zu lenken. Wenn beispielsweise in Fahrtrichtung gesehen eine Rechtskurve gefahren wird und dabei ein Fehler im Lenksystem auftritt, so sollte bei einem solchen Fehler zuerst die nunmehr nicht mehr aktiv lenkbare Hinterachse in ihrem Lenkeinschlag festgestellt werden, so dass die bereits angelenkte Kurve weitergefahren werden kann. Dies ist nunmehr entweder auch in der üblichen Weise durch die Schaltung der Hydraulikventile möglich oder es kann über die spezielle Anbremsung der Räder der Lenkwinkel beibehalten werden. Wenn nun in die andere Richtung gelenkt werden soll, um das Fahrzeug auf eine Gerade zurückzuführen, so waren bisher gemäß dem Stand der Technik Zentrierzylinder notwendig, um die Hinterachse in die neutrale Stellung zu überführen. Das Überführen der Hinterachse in die neutrale Stellung kann nunmehr über die spezielle Anbremsung der Räder erfolgen, so dass beispielsweise aus der Rechtskurve heraus durch Anbremsung des linken Rades der nicht mehr aktiv lenkbaren Hinterachse die Lenkung dieser Hinterachse in die gewünschte Richtung nach links erfolgt. Die üblicher Weise vorhandenen ABS-Bremssysteme, wie sie hinlänglich bekannt sind und keiner weiteren Erläuterung bedürfen, oder Modifikationen hiervon, lassen das gezielte und eindeutige Abbremsen einzelner Räder einer aktiv gelenkten Hinterachse zu, um die gewünschte Stellung bzw. Position zu erreichen.

Erstmals bildet also bei einem Fahrzeugkran der genannten Art ein an sich bekanntes Bremssystem die erforderliche Redundanz zum Lenksystem der aktiv gelenkten Hinterachse. Entsprechend ist beim Eintritt eines Fehlers in dem Hinterachslenksystem ein Weiterlenken und/oder ein Zentrieren der gelenkten Hinterachse möglich.

Wie bereits zuvor erläutert, ist ein bekanntes Zentriersystem aufgrund der großen Anzahl von zugehörigen Bauteilen fehleranfällig. Ein einfaches Sperrsystem, wie es an sich bekannt ist, kombiniert mit der vorliegenden Erfindung, bei der im Fehlerfall eine fehlerbehaftete Hinterachse über gezieltes Anbremsen der zugehörigen Räder dieser Hinterachse eine vorbestimmte Lenkstellung einnehmen kann, besitzt weniger Bauteile und entsprechend verringert sich die Fehleranfälligkeit, wodurch sich wiederum die Zuverlässigkeit erhöht.

Gegenüber bekannten redundanten Systemen, bei denen alle möglichen fehlerbehafteten Teile zweifach vorhanden sind, wird erfindungsgemäß die Anzahl der Bauteile stark verringert und damit kann ein solches System gemäß der Erfindung auch kostengünstiger sein.

Das eingangs erläuterte bekannte Zentriersystem mit den großen Zentrierzylindern benötigt viel Platz, da der Zentrierzylinder viel größer dimensioniert werden muss als die zugehörigen Lenkzylinder. Bei einer erfindungsgemäßen Hinterachslenkung entfallen die Zentrierzylinder und damit kann das gesamte System an der Hinterachse viel kleiner bauen.

Erfindungsgemäß ist erstmals auch keine Handnotbetätigung mehr notwendig, die bei Systemen vorhanden war, die nur ein hydraulisches Blockieren einer aktiv gelenkten Hinterachse im Falle eines Fehlers vorsahen. Dadurch dass erfindungsgemäß keine Handnotbetätigung mehr notwendig ist, kann das u.U. notwendige Sperrventil direkt an den Lenkzylindern eingebaut werden. Dadurch ist eine bisher nachteilige und in Kauf zu nehmende Elastizität der Hydraulikschläuche nicht mehr zu berücksichtigen, wozu sich auch ein stabilerer Geradeauslauf der aktiv gelenkten Hinterachse ergibt.

Zusammenfassend kann also erfindungsgemäß eine aktive Hinterachslenkung zu geringeren Kosten als bei einem bekannten Zentriersystem mit separaten Lenkzylindern und Zentrierzylindern gebaut werden. Die Fehleranfälligkeit könnte bei einer erfindungsgemäßen aktiven Hinterachslenkung verringert sein, da weniger Bauteile vorhanden sind. Außerdem könnte bei einer erfindungsgemäßen Hinterachslenkung auch das Weiterfahren nach Ausfall einer Hinterachslenkung möglich sein.

Eine beispielhafte Ausführungsform einer erfindungsgemäßen Hinterachslenkung für einen Fahrzeugkran, der eine oder mehrere aktiv gelenkte Hinterachsen mit daran angeordneten Rädern aufweist, besitzt an einer gelenkten Vorderachse des Fahrzeugkrans einen Sollwinkelgeber. Einer aktiv gelenkten Hinterachse ist in dieser beispielhaften Ausführungsform ein erster Istwinkelgeber und ein im Fehlerfall des ersten Istwinkelgebers dessen Funktion übernehmender zweiter Istwinkelgeber zugeordnet. Eine derartige Ausgestaltung hat den Vorteil, dass im Fehlerfall des Istwinkelgebers die aktive Lenkung der Hinterachse mit den Messwerten des zweiten Istwinkelgebers erfolgen kann. Sollte dazu noch ein Fehler in der Lenkung der aktiv lenkbaren Hinterachse auftreten, kann weiterhin gemäß der Erfindung auf der Grundlage der Werte des zweiten Istwinkelgebers durch gezieltes Anbremsen zumindest eines Rades der einzigen aktiv gelenkten Hinterachse eine vorbestimmte gewünschte Lenkstellung eingenommen werden.

Eine weiter beispielhafte Ausführungsform einer erfindungsgemäßen Hinterachslenkung sieht vor, dass einer gelenkten Vorderachse des Fahrzeugkrans ein erster Sollwinkelgeber und ein im Fehlerfall des ersten Sollwinkelgebers dessen Funktion übernehmender zweiter Sollwinkelgeber zugeordnet sind. Mittels einer derartigen Ausgestaltung ist auch im Fehlerfall eines Sollwinkelgebers und/oder eines Fehlers in der Lenkung einer aktiv gelenkten Hinterachse weiterhin mittels der erfindungsgemäßen Steuerung über die Bremsen eine Anlenkung einer fehlerbehafteten aktiven Hinterachslenkung möglich. Es wird dazu anhand des zweiten Sollwinkelgebers der gewünschte Lenkeinschlag für die aktive Hinterachslenkung errechnet, die auch, wenn sie fehlerbehaftet ist, mittels der Erfindung weiterhin gelenkt werden kann.

In noch einer weiteren beispielhafte Ausführungsform einer erfindungsgemäßen Hinterachslenkung ist die Steuerung so ausgebildet, dass bei einem Fehler, beispielsweise in dem hydraulischen Lenksystem, das Bremssystem über ein ABS-Steuergerät so gesteuert wird, dass durch gezieltes Anbremsen zumindest eines Rades derjenigen aktiv gelenkten Hinterachse, die fehlerbehaftet ist, eine vorbestimmte gewünschte Lenkstellung eingenommen wird. Es wird also hier erstmals eine an sich vorhandene ABS-Steuereinrichtung wie beispielsweise ein ABS-Steuergerät zum gezielten Anbremsen und damit Lenken der fehlerbehafteten lenkbaren Hinterachse benutzt. Falls ein übliches Programm des ABS-Steuergeräts einer gezielten Lenkung der fehlerbehafteten Hinterachse entgegensteht, wird dessen Funktionalität bei einer beispielhaften weiteren Ausführungsform der erfindungsgemäßen Hinterachslenkung durch die neue erfindungsgemäße Steuerung ersetzt. Die Ersetzung erfolgt natürlich nur zeitweise und insbesondere kann dies allgemein für die Erfindung bedeuten, das lediglich eine andere oder modifizierte Regelung als die bekannte ABS-Regelung abläuft. Der Vollständigkeit halber ist noch anzumerken, dass im vorliegenden Fall allgemein der Begriff Steuerung auch durch Regelung ersetzt werden kann.

Eine weitere beispielhafte Ausführungsform der erfindungsgemäßen Hinterachslenkung ist derart ausgestaltet, dass bei einem Fehler des hydraulischen Lenksystems das Bremssystem über ein EBS-Steuergerät so gesteuert wird, dass durch gezieltes Anbremsen zumindest eines Rades derjenigen aktiv gelenkten Hinterachse, die fehlerbehaftet ist, eine vorbestimmte gewünschte Lenkstellung eingenommen wird. Damit wird erstmals ein EBS-Steuergerät für das gezielte Anbremsen einer aktiv gelenkten Hinterachse zur Einstellung einer gewünschten Lenkstellung benutzt. Anstatt des EBS-Steuergeräts kann alternativ auch eine ASR-Elektronik verwendet werden. In einer weiteren beispielhaften Ausführungsform einer aktiv gelenkten Hinterachslenkung gemäß der vorliegenden Erfindung sind jeder aktiv gelenkten Hinterachse zwei Lenkzylinder zugeordnet. Wenn beispielsweise ein Lenkzylinder ausfällt, wird die erfindungsgemäße Steuerung das Anbremsen der Räder der fehlerbehafteten Hinterachse aktivieren. Damit kann dann trotz Ausfall eines Lenkzylinders die betroffene Hinterachse weiterhin in der zuvor beschriebenen Weise gelenkt werden. Zudem müssen auch keine Zentrierzylinder mehr vorhanden sein, wie es bei der zuvor beschriebenen DE 102 45 618 A1 der Fall ist. Außerdem kann erstmals ein Sperrventil an bzw. in jedem Lenkzylinder der aktiv gelenkten Hinterachse angebaut bzw. eingebaut sein, so dass bisher notwendige Hydraulikschläuche zu den Lenkzylindern entfallen, was eine bessere Geradeauslenkung und -führung dieser Hinterachse erlaubt. Bei einem Sperrventil handelt es sich hier um ein Ventil, dass den Hydraulikölfluss zum oder von dem Lenkzylinder blockiert. Diese Funktion wurde bisher dazu genutzt, die zwei Hydraulikzylinder so zu blockieren, dass die im Fehlerfall vorhandene Lenkstellung beibehalten wird.

Gemäß einem weiteren Aspekt der vorliegenden Erfindung wird ein Verfahren zum Lenken einer durch ein hydraulisches Lenksystem aktiv gelenkten Hinterachse mit daran angeordneten Rädern eines Fahrzeugkranes bereitgestellt. Bei dem erfindungsgemäßen Verfahren wird ein Fehler, der den Lenkvorgang mittels dem hydraulischen Lenksystem der aktiv gelenkten Hinterachse beeinflusst, in irgend einer Weise erfasst, und dann wird durch gezieltes Anbremsen zumindest eines der Räder der fehlerbehafteten Hinterachse eine vorbestimmte gewünschte Lenkstellung der fehlerbehafteten Hinterachse eingenommen.

Wie bereits einleitend beschrieben, kann erstmals ohne Zentrierzylinder eine fehlerbehaftete aktive Hinterachslenkung weiterhin in eine vorbestimmte gewünschte Lenkstellung gebracht werden, in dem das bisher für andere Zwecke benutzte gezielte Anbremsen einzelner Räder einer Hinterachse dazu benutzt wird, die Hinterachse in ihrer Lenkstellung bzw. -position einzustellen. Ein solches redundantes System ersetzt neben dem bisher bekannten Zentrierzylinder unter Umständen auch bisher notwendige weitere Hydraulikbauteile.

Bei einer beispielhaften Ausführungsform eines erfindungsgemäßen Verfahrens wird ein Fehler dadurch erfasst, dass ein Ausfall eines Lenkrechners für eine aktive gelenkte Hinterachse festgestellt wird. Ein Lenkrechner errechnet den für eine zugeordnete aktiv gelenkte Hinterachse notwendigen Lenkwinkel anhand von Werten eines Sollwinkelgebers einer gelenkten Vorderachse. Fällt nun der Lenkrechner aus, so musste bisher entweder der Lenkzylinder blockiert werden, so dass die Lenkstellung der fehlerbehafteten aktiv gelenkten Hinterachse beibehalten wird, oder es muss sofort angehalten werden. Durch die erfindungsgemäße Ausgestaltung ist ein gewünschter Lenkwinkel weiterhin einstellbar und insbesondere kann auch ein Zurückführen in die Geradeausstellung durch die erfindungsgemäße Anbremsung einzelner Räder der fehlerbehafteten Hinterachse erfolgen.

Bei einer weiteren beispielhaften Ausführungsform eines erfindungsgemäßen Verfahrens wird ein Fehler dadurch erfasst, dass ein Ausfall eines Istwinkelgebers, der einer aktiv gelenkten Hinterachse zugeordnet ist, festgestellt wird. Bei bisherigen bekannten Verfahren führte der Ausfall eines Istwinkelgebers dazu, dass die Lenkzylinder und damit die Lenkstellung der zugehörigen Hinterachse blockierten. Aufgrund des Istwinkelgeberausfalls weiß der Lenkrechner für diese Hinterachse nämlich nicht mehr, welche Lenkstellung diese Hinterachse gerade hatte. Bei dem erfindungsgemäßen Verfahren kann trotz Ausfall des Istwinkelgebers zumindest die Hinterachse in der momentanen Lenkstellung gehalten werden, indem die Räder der Hinterachse, deren Istwinkelgeber ausgefallen ist, entsprechend gezielt einzeln angebremst werden.

Eine weitere beispielhafte Ausführungsform eines erfindungsgemäßen Verfahrens sieht vor, dass im Fall eines Fehlers eines Lenkrechners für eine aktiv gelenkte Hinterachse ein Lenkrechner für eine andere aktiv gelenkte Hinterachse die Funktion des fehlerbehafteten Lenkrechners übernimmt. Damit kann eine redundante Ausgestaltung der Lenkrechner geschaffen werden und weiterhin über die erfindungsgemäße Anbremsung auch bei Ausfall eines Lenkrechners eine Lenkung der Hinterachsen erfolgen.

Schließlich ist bei einer weiteren beispielhaften Ausführungsform eines erfindungsgemäßen Verfahrens vorgesehen, dass im Fall eines Fehlers eines Lenkrechners für eine aktiv gelenkte Hinterachse ein Lenkrechner für eine andere aktiv gelenkte Hinterachse die Steuerung für das gezielte Anbremsen zumindest eines der Räder der fehlerbehafteten Hinterachse derart übernimmt, dass eine vorbestimmte gewünschte Lenkstellung der fehlerbehafteten Hinterachse eingenommen wird.

Der guten Ordnung halber ist anzumerken, dass die zuvor beschriebene Hinterachslenkung gemäß der vorliegenden Erfindung nicht nur für Fahrzeugkrane, sondern auch für andere Fahrzeugarten wie insbesondere Lastkraftwagen mit zumindest einer lenkbaren Hinterachse verwendbar ist. Entsprechend betrifft die vorliegende Erfindung nicht nur eine Hinterachslenkung für Fahrzeugkrane, sondern auch eine Hinterachslenkung für Fahrzeuge jeglicher Bauart, die zumindest eine lenkbare Hinterachse besitzen.

### KURZE BESCHREIBUNG DER ZEICHNUNGEN

Im Folgenden sind zur weiteren Erläuterung zum besseren Verständnis mehrere Ausführungsbeispiele der vorliegenden Erfindung unter Bezugnahme auf die beigefügten Zeichnungen näher beschrieben. Es zeigt:
- Fig. 1: ein schematisches Blockschaltbild einer ersten beispielhaften Ausführungsform der er- findungsgemäßen aktiven Hinterachslenkung,
- Fig. 2: eine zweite beispielhafte Ausführungsform der aktiven Hinterachslenkung gemäß der Erfindung mit zusätzlichem Steuerungsrechner,
- Fig. 3: eine weitere beispielhafte Ausführungsform einer aktiven Hinterachslenkung gemäß der Erfindung mit gegenüber der in der Fig. 2 gezeigten Ausführungsform zusätzlichem Istwinkelgeber an einer aktiven Hinterachslenkung ,
- Fig. 4: noch eine weitere beispielhafte Ausführungsform einer aktiven Hinterachslenkung gemäß der Erfindung mit gegenüber der in der Fig. 3 gezeigten Ausführungsform zusätzlichem Sollwinkelgeber an einer Vorderachse des Fahrzeugs, und
- Fig. 5: eine Hinterachslenkung gemäß dem Stand der Technik.

### DETAILLIERTE BESCHREIBUNG VON AUSFÜHRUNGSBEISPIELEN DER VORLIEGENDEN ERFINDUNG

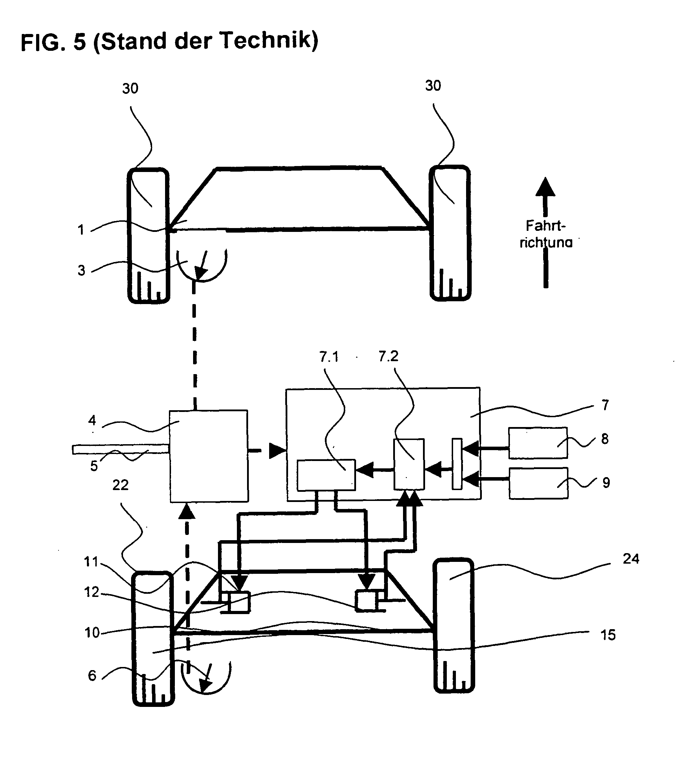

Zum besseren Verständnis der Erfindung wird eingangs unter Bezugnahme auf die Fig. 5 eine aktive Hinterachslenkung gemäß dem Stand der Technik erläutert.

Das bekannte System gemäß der Fig. 5 umfasst eine Vorderachse 1 mit zwei lenkbaren Rädern 30. Die Räder 30 der Vorderachse 1 werden über ein hier nicht gezeigtes Lenkrad und eine übliche bekannte Servolenkung mit Hydraulikunterstützung sowie zugehörigem Lenkgestänge in ihrer Winkelstellung bzw. Lenkstellung verändert. Ein Sollwinkelgeber 3 an der Vorderachse 1 erfasst den gewünschten Lenkwinkel, der vom Fahrer über das Lenkrad usw. an die Räder 30 der Vorderachse 1 übermittelt wird. Ein Steuerungsrechner 4 ist mit dem Sollwinkelgeber 3 der Vorderachse 1 verbunden.

Bei dem in der Fig. 5 gezeigten bekannten Fahrzeugkran mit aktiv gelenkter Hinterachse 10 ist ein Istwinkelgeber 6 an der zu lenkenden Hinterachse 10 angeordnet. Jedem Rad 22, 24 der Hinterachse 10 ist jeweils ein Lenkzylinder 11 bzw. 12 zugeordnet, mittels denen die Räder 22, 24 der Hinterachse 10 in gewünschter Weise ausgelenkt werden. Die Lenkzylinder 11, 12 sind über eine elektro-hydraulischen Block 7, indem ein Proportionalventil 7.1 und ein Sperrventil 7.2 integriert sind, mit einer Hydraulikpumpe 8 und einer hydraulischen Notlenkung 9 verbunden. Der elektro-hydraulische Block 7 ist wiederum mit dem Steuerungsrechner 4 verbunden.

Die Funktionsweise dieses bekannten Steuerungssystems funktioniert wie folgt. Der Sollwinkelgeber 3 an der Vorderachse 1 erfasst den Fahrerwunsch der Lenkbewegung und leitet ihn an den Steuerungsrechner 4 weiter. Der Steuerungsrechner 4 erfasst auch den Hinterachswinkel mit dem Istwinkelgeber 6 und das vom Fahrer gewählte Fahrprogramm, welches über einen Schalter vom Fahrer wählbar ist. Ein solches Fahrprogramm kann zum Beispiel "enge Kurvenfahrt", "Wegfahren von der Wand", "Hundegang (alle Räder gleichsinnig)", "Straßenfahrt", "freies Lenken (alle Räder der Hinterachsen gleichsinnig mittels separate Betätigung unabhängig vom Lenkrad)" oder dergleichen sein Die Fahrgeschwindigkeit wird zum Beispiel über einen Datenbus 5 an den Steuerungsrechner 4 übertragen.

Hat die Hinterachse 10 nicht die gewünschte Position, dann wird beim geöffneten Sperrventil 7.2 durch Ansteuern des Proportionalventils 7.1 die Hinterachse 10 zur Sollposition gelenkt. Bei Geschwindigkeiten über einer definierten Schwelle und bei speziellen Fehlern beim Lenksystem wird das Sperrventil 7.2 stromlos geschaltet und damit geschlossen. Das Hydrauliköl zwischen Sperrventil 7.2 und Lenkzylindern 11, 12 ist dann eingespannt, wodurch die Hinterachse 10 hydraulisch verriegelt ist. Dieses bekannte System veranschaulicht also das eingangs erläuterte Sperrsystem. Wenn bei diesem bekannten System gemäß der DE 102 45 618 A1 die Hinterachse 10 wieder in die neutrale Stellung überführt werden soll, wird das Sperrventil 7.2 geöffnet und über in der Fig. 5 nicht gezeigten Zentrierzylinder die Achse 10 wieder in die Neutralstellung überführt.

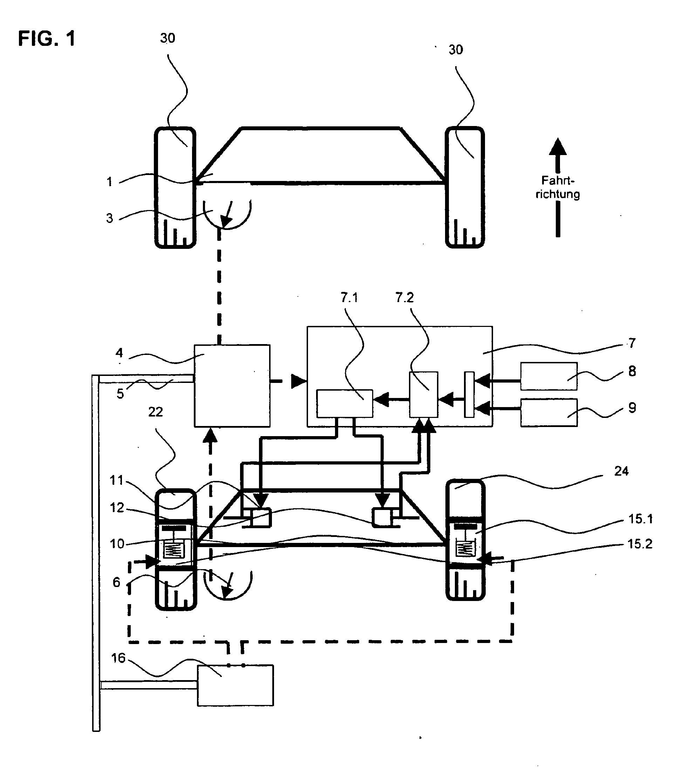

Dem gegenüber wird bei der ersten Ausführungsform der vorliegenden Erfindung, wie sie in der Fig. 1 gezeigt ist, ein Bremssystem 15 mit elektro-pneumatischen Stellern 15.1, 15.2 zur gezielten Anbremsung der Räder 22, 24 benutzt, um im Fehlerfall eine gewünschte Lenkstellung zu erzielen. Die in der Fig. 1 gezeigte Ausführungsform weist neben dem Steuerungsrechner 4 einen Steuerungsrechner 16 für die Bremse und die zugehörigen Stellern 15.1, 15.2 auf. Bei schwerwiegenden Lenkungsfehlern wird die betroffene Hinterachse 10 durch gezieltes Bremsen der einzelnen Räder 22, 24 in eine gewünschte Position gelenkt.

Bei der in der Fig. 1 gezeigten Ausführungsform wird die Sicherheitsfunktion durch einen Lenkrechner, der beispielsweise in dem Steuerungsrechner 4 integriert sein kann, selbst ausgelöst. Dadurch ist ein Weiterlenken oder Zentrieren bei bestimmten Fehlern wie beispielsweise einem Ausfall des Lenkrechners 4 oder eines Istwinkelgebers 6 nicht immer möglich. In diesen Fällen würde die Hinterachse 10 in der aktuellen Position gesperrt werden.

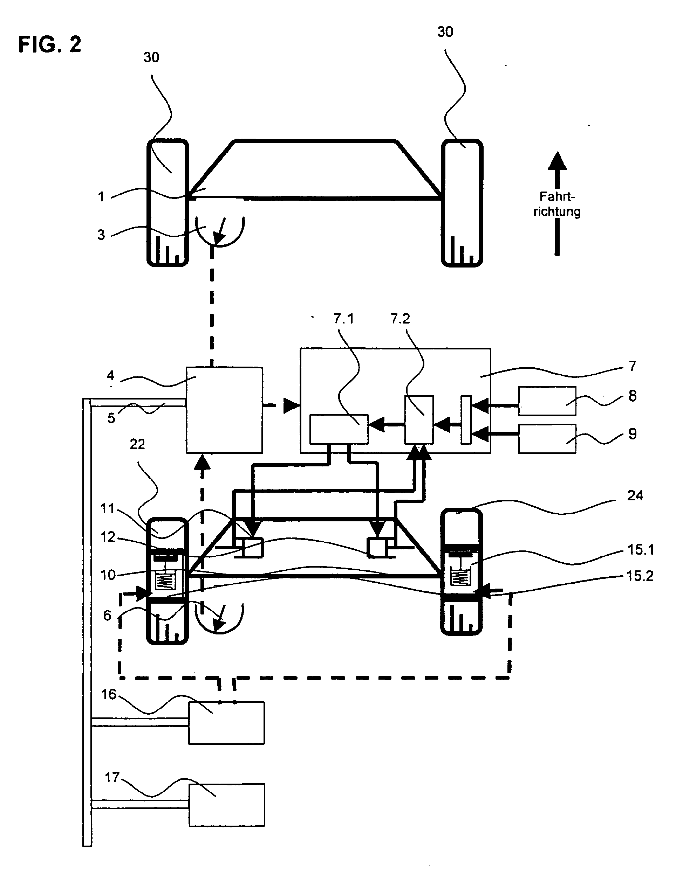

Eine weitere beispielhafte Ausführungsform der vorliegenden Erfindung ist in der Fig. 2 gezeigt. Hier ist zusätzlich zu der in der Fig. 1 gezeigten Ausführungsform ein Steuerungsrechner 17 vorhanden. Dieser Steuerungsrechner bzw. das Steuergerät 17 kann bei Fehlen eines Lenkrechners oder Ausfall desselben die Hinterachse 10 mittels Abbremsen einzelner Räder 22, 24 positionieren. Das Steuergerät 17 kann auch ein anderer bereits vorhandener Fahrzeugrechner sein wie beispielsweise ein Anzeigerechner, ein Leitrechner oder ein anderer Lenkrechner. Letzteres ist beispielsweise bei Fahrzeugen mit mehreren aktiv gelenkten Hinterachsen 10 der Fall, bei dem dann der Lenkrechner einer anderen Hinterachse als Steuerungsrechner 17 verwendet werden kann.

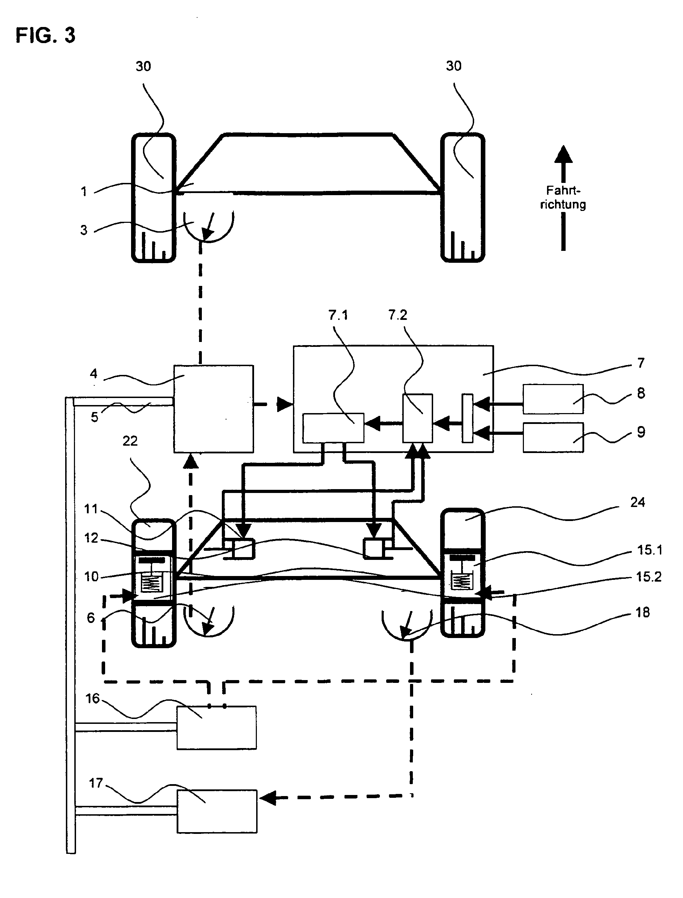

Eine dritte Ausführungsform der vorliegenden Erfindung ist in der Fig. 3 gezeigt. Hier ist zusätzlich zu den in den Fig. 1 und 2 gezeigten Ausführungsformen ein weiterer Istwinkelgeber 18 vorhanden. Wenn der Istwinkelgeber 6 einen Fehler aufweist, kann immer noch anhand des weiteren Istwinkelgebers 18 die fehlerbehaftete Hinterachse 10 mittels Abbremsen der einzelnen Räder 22, 24 positioniert werden. Bei Fahrzeugen mit mehreren aktiv gelenkten Hinterachsen 10 können für jede aktiv gelenkte Hinterachse 10 zwei Istwinkelgeber 6, 18 vorgesehen sein, um Redundanz bei Ausfall eines verwendet werden.

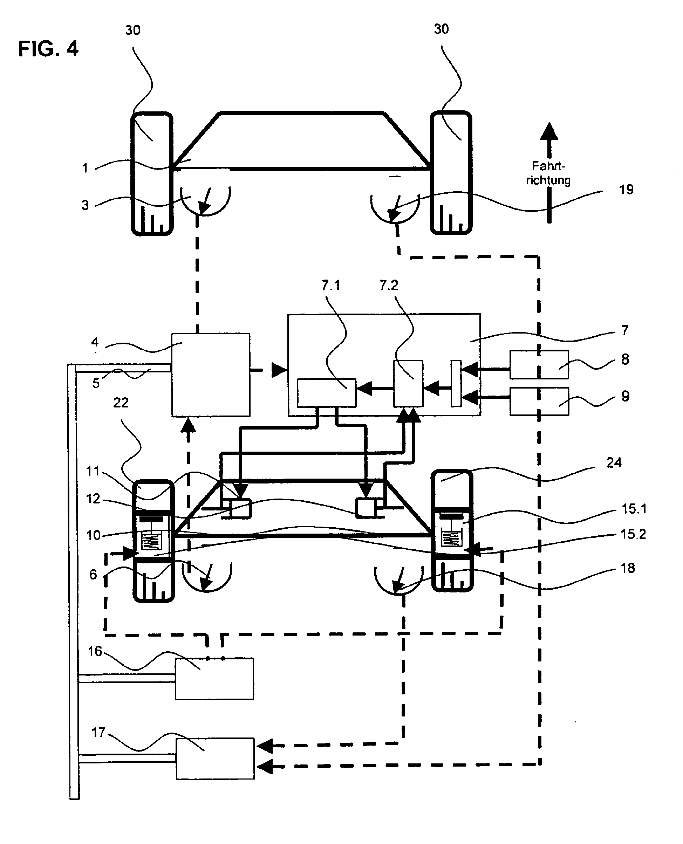

Schließlich zeigt die Fig. 4 eine weitere Ausführungsform der vorliegenden Erfindung. Hier wird ergänzend zu den in den Fig. 1 bis 3 gezeigten Ausführungsform der vorliegenden Erfindung zusätzlich ein Sollwinkelgeber 19 an der Vorderachse 1 vorgesehen. Entsprechend kann auch bei einem Fehler des bisherigen Sollwinkelgebers 3 die mit einem Fehler behaftete Hinterachse 10 mittels Abbremsen einzelner Räder 22, 24 positioniert werden, wozu der weitere Sollwinkelgeber 19 mit dem weiterem Steuerungsrechner 17 verbunden ist.

Bei allen genannten Ausführungsformen der vorliegenden Erfindung ist es bei einem Fehler, der bei bisherigen Systemen ein Lenken einer Hinterachse 10 nicht mehr zulässt, möglich, die fehlerbehaftete Hinterachse 10 bzw. die Räder 22, 24 dieser Hinterachse 10 so zu positionieren, dass das Fahrzeug stabil in der gewählten bzw. gewollten Spur bleibt.

Es ist auch möglich, die Steuerung so vorzusehen, dass bei einer Kurvenfahrt die fehlerbehaftete Hinterachse weiterhin in der gewollten Art eingelenkt bleibt, wodurch entsprechend die Räder 22, 24 spezifisch angebremst werden.

Es ist auch möglich, das Anbremsen der einzelnen Räder 22, 24 der fehlerbehafteten Hinterachse 10 so über das Anbremsen zu lenken, dass weiterhin in der gewünschten Weise gelenkt wird.

Überdies ist es auch durch das Anbremsen möglich, eine Geradeausfahrt in der Nullgrad-Stellung vorzusehen, was wiederum durch ein spezielles Anbremsen der Räder ermöglicht wird, aber über die üblichen bzw. zu modifizierenden Programme eines ABS- Steuergeräts, eines EBS-Steuergerätes oder eines ASR-Steuergerätes erzielbar ist.

Bei einer Hinterachse mit Freischaltung als Nachlaufachse würden bei einer Kurvenfahrt diese Hinterachse 10 eingelenkt stehen bleiben oder durch Bremsen weiterlenken und bei Geradeausfahrt freigeschaltet werden.

## Patentansprüche

1. Hinterachslenkung für einen Fahrzeugkran, der mindestens eine aktiv gelenkte Hinterachse (10) mit daran angeordneten Rädern (22, 24) aufweist, umfassend:
- ein hydraulisches Lenksystem (7-12), das einen oder mehrere hydraulische Lenkzylinder (11, 12) umfasst, von denen jeweils eine bestimmte Anzahl einer aktiv gelenkten Hinterachse (10) zugeordnet sind, um diese aktiv gelenkte Hinterachse (10) in gewünschter Weise auszulenken, **gekennzeichnet durch:**
- ein Bremssystem (15), das zum individuellen Anbremsen jedes Rades (22, 24) der zumindest einen aktiv gelenkten Hinterachse (10) ausgebildet ist,
- eine Steuerung (16), die bei einem Fehler des hydraulischen Lenksystems (7-12) das Bremssystem (15) so steuert, dass **durch** gezieltes Anbremsen zumindest eines Rades (22, 24) derjenigen aktiv gelenkten Hinterachse (10), die fehlerbehaftet ist, eine vorbestimmte gewünschte Lenkstellung eingenommen wird.

2. Hinterachslenkung für einen Fahrzeugkran nach Anspruch 1, der eine aktiv gelenkte Hinterachse (10) mit daran angeordneten Rädern (22, 24) aufweist, **dadurch gekennzeichnet, dass** einer gelenkten Vorderachse (1) des Fahrzeugkranes ein Sollwinkelgeber und einer aktiv gelenkten Hinterachse (10) ein erster Istwinkelgeber und ein im Fehlerfall des ersten Istwinkelgebers dessen Funktion übernehmender zweiter Istwinkelgeber zugeordnet sind.

3. Hinterachslenkung für einen Fahrzeugkran nach Anspruch 1 oder 2, **dadurch gekennzeichnet, dass** einer gelenkten Vorderachse (1) des Fahrzeugkranes ein erster Sollwinkelgeber und ein im Fehlerfall des ersten Sollwinkelgebers dessen Funktion übernehmender zweiter Sollwinkelgeber zugeordnet sind.

4. Hinterachslenkung für einen Fahrzeugkran nach Anspruch 3, der zumindest zwei gelenkte Vorderachsen (1) aufweist, die miteinander mechanisch gekoppelt sind, und der ersten gelenkten Vorderachse (1) des Fahrzeugkranes ein erster Sollwinkelgeber (3) und zumindest einer zweiten gelenkten Vorderachse (1) ein zweiter Sollwinkelgeber zugeordnet ist, und eine Steuerung (4) mit beiden Sollwinkelgebem verbunden ist und bei Ausfall eines Sollwinkelgebers (3) auf den anderen Sollwinkelgeber (3) zurückgegriffen wird, um eine aktiv gelenkte Hinterachse (10) zu steuern.

5. Hinterachslenkung für einen Fahrzeugkran nach einem der Ansprüche 1-4, **dadurch gekennzeichnet, dass** die Steuerung (4) bei einem Fehler des hydraulischen Lenksystems (7-12) das Bremssystem (15) über ein Steuergerät so steuert, dass durch gezieltes Anbremsen zumindest eines Rades (22, 24) derjenigen aktiv gelenkten Hinterachse (10), die fehlerbehaftet ist, eine vorbestimmte gewünschte Lenkstellung eingenommen wird.

6. Hinterachslenkung für einen Fahrzeugkran nach Anspruch 5, **dadurch gekennzeichnet, dass**
- das Steuergerät ein ABS-Steuergerät, ein EBS-Steuergerät oder ein ESR-Steuergerät ist, und
- im Falle eines Fehlers des hydraulischen Lenksystems (7-12) das Bremssystem (15) über das Steuergerät durch gezieltes Anbremsen zumindest eines Rades (22, 24) derjenigen aktiv gelenkten Hinterachse (10), die fehlerbehaftet ist, eine vorbestimmte gewünschte Lenkstellung eingenommen wird, wobei in diesem Fall die primäre Steuergerät-Bremsung wie eine ABS-, EBS- oder eine ESR-Bremsung durch die für die gewünschte Lenkung der fehlerbehafteten Hinterachse (10) ersetzt ist.

7. Hinterachslenkung für einen Fahrzeugkran nach einem der voranstehenden Ansprüche, **dadurch gekennzeichnet, dass** jeder aktiv gelenkten Hinterachse (10) zwei Lenkzylinder (11, 12) zugeordnet sind.

8. Hinterachslenkung für einen Fahrzeugkran nach Anspruch 7, **dadurch gekennzeichnet, dass** im hydraulischen Lenksystem (7-12) jeder aktiv gelenkten Hinterachse (10) jeweils an jedem Lenkzylinder (11, 12) dieser Hinterachse (10) ein Sperrventil (7.2) angebaut ist, mit dem der Hydraulikölfluss zum oder von dem Lenkzylinder (11, 12) blockierbar ist.

9. Verfahren zum Lenken einer durch ein hydraulisches Lenksystem (7-12) aktiv gelenkten Hinterachse (10) mit daran angeordneten Rädern (22, 24) eines Fahrzeugkrans:
- Erfassen eines Fehlers, der den Lenkvorgang mittels dem hydraulischen Lenksystem der aktiv gelenkten Hinterachse (10) beeinflusst,
**gekennzeichnet durch** ein gezieltes Anbremsen zumindest eines der Räder (22, 24) der fehlerbehafteten Hinterachse (10) derart, dass eine vorbestimmte gewünschte Lenkstellung der fehlerbehafteten Hinterachse (10) eingenommen wird.

10. Verfahren nach Anspruch 9, **dadurch gekennzeichnet, dass** ein Fehler **dadurch** erfasst wird, dass ein Ausfall eines Lenkrechners (16) für eine aktiv gelenkte Hinterachse (10) festgestellt wird.

11. Verfahren nach Anspruch 9 oder 10, **dadurch gekennzeichnet, dass** ein Fehler **dadurch** erfasst wird, dass ein Ausfall eines Istwinkelgebers (6, 18), der einer aktiv gelenkten Hinterachse (10) zugeordnet ist, festgestellt wird.

12. Verfahren nach einem der Ansprüche 9-11, **dadurch gekennzeichnet, dass** im Falle eines Fehlers eines Lenkrechners (16) für eine aktiv gelenkte Hinterachse (10) ein Lenkrechner (16) für eine andere aktiv gelenkte Hinterachse (10) die Funktion des fehlerbehafteten Lenkrechners (16) übernimmt.

13. Verfahren nach einem der Ansprüche 9-12, **dadurch gekennzeichnet, dass** im Falle eines Fehlers eines Lenkrechners (16) für eine aktiv gelenkte Hinterachse (10) ein Lenkrechner (16) für eine andere aktiv gelenkte Hinterachse (10) die Steuerung für das gezielte Anbremsen zumindest eines der Räder (22, 24) der fehlerbehafteten Hinterachse (10) derart, dass eine vorbestimmte gewünschte Lenkstellung der fehlerbehafteten Hinterachse (10) eingenommen wird, übernimmt.

## Claims

1. Rear-axle steering for a mobile crane having at least one actively steered rear axle (10) with wheels (22, 24) arranged thereon, comprising:
- an hydraulic steering system (7-12) comprising one or a plurality of hydraulic steering cylinders (11, 12) of which a given number are associated with an actively steered rear axle (10) in each case in order to steer this actively steered rear axle (10) in a desired manner, **characterised by**:
- a braking system (15) designed for individual braking of each wheel (22, 24) of the at least one actively steered rear axle (10),
- a control means (16) which in the event of a fault in the hydraulic steering system (7-12) controls the braking system (15) in such a manner that a predetermined desired steering position is assumed through targeted braking of at least one wheel (22, 24) of that actively steered rear axle (10) which is defective.

2. Rear-axle steering for a mobile crane according to claim 1, the crane having an actively steered rear axle (10) with wheels (22, 24) arranged thereon, **characterised in that** a desired angle sensor is associated with a steered front axle (1) of the mobile crane and a first actual angle sensor and a second actual angle sensor assuming the function of the first actual angle sensor in the event of a fault in the latter are associated with an actively steered rear axle (10).

3. Rear-axle steering for a mobile crane according to claim 1 or 2, **characterised in that** a first desired angle sensor and a second desired angle sensor assuming the function of the first desired angle sensor in the event of a fault in the latter are associated with a steered front axle (1).

4. Rear-axle steering for a mobile crane according to claim 3, the crane having at least two steered front axles (1) mechanically coupled to one another, and a first desired angle sensor (3) is associated with the first steered front axle (1) of the mobile crane and a second desired angle sensor is associated with at least one second steered front axle (1), and a control means (4) is connected to both desired angle sensors and in the event of a malfunction in one desired angle sensor (3), the other desired angle sensor (3) is fallen back upon in order to control an actively steered rear axle (10).

5. Rear-axle steering for a mobile crane according to any one of claims 1-4, **characterised in that** in the event of a fault in the hydraulic steering system (7-12), the control means (4) controls the braking system (15) via a control apparatus in such a manner that a predetermined desired steering position is assumed through targeted braking of at least one wheel (22, 24) of that actively steered rear axle (10) which is defective.

6. Rear-axle steering for a mobile crane according to claim 5, **characterised in that**
- the control apparatus is an ABS control apparatus, an EBS control apparatus or an ESR control apparatus, and
- in the event of a fault in the hydraulic steering system (7-12), the braking system (15) [is controlled] via the control apparatus [in such a manner that] a predetermined desired steering position is assumed through targeted braking of at least one wheel (22, 24) of that actively steered rear axle (10) which is defective, wherein in this instance the primary control-apparatus brake action such as ABS, EBS or ESR brake action is replaced by that for the desired steering of the defective rear axle (10).

7. Rear-axie steering for a mobile crane according to any one of the preceding claims, **characterised in that** two steering cylinders (11, 12) are associated with each actively steered rear axle (10).

8. Rear-axie steering for a mobile crane according to claim 7, **characterised in that** in the hydraulic steering system (7-12) of each actively steered rear axle (10), a respective shut-off valve (7.2) is mounted on each steering cylinder (11, 12) of this rear axle (10), the hydraulic oil flow to or from the steering cylinder (11, 12) being able to be blocked by means of this shut-off valve (7.2).

9. A method of steering a mobile-crane rear axle (10), actively steered by an hydraulic steering system (7-12), with wheels (22, 24) arranged thereon:
- detection of a fault which influences the steering operation by means of the hydraulic steering system of the actively steered rear axle (10),
**characterised by** targeted braking of at least one of the wheels (22, 24) of the defective rear axle (10) in such a manner that a predetermined desired steering position of the defective rear axle (10) is assumed.

10. A method according to claim 9, **characterised in that** a fault is detected **in that** a malfunction of a steering computer (16) for an actively steered rear axle (10) is ascertained.

11. A method according to claim 9 or 10, **characterised in that** a fault is determined **in that** a malfunction of an actual angle sensor (16, 18) associated with an actively steered rear axle (10) is ascertained.

12. A method according to any one of claims 9-11, **characterised in that** in the event of a fault in a steering computer (16) for an actively steered rear axle (10), a steering computer (16) for another actively steered rear axle (10) assumes the function of the defective steering computer (16).

13. A method according to any one of claims 9-12, **characterised in that** in the event of a fault in a steering computer (16) for an actively steered rear axle (10), a steering computer (16) for another actively steered rear axle (10) assumes the control for the targeted braking of at least one of the wheels (22, 24) of the defective rear axle (10) in such a manner that a predetermined desired steering position of the defective rear axle (10) is assumed.

## Revendications

1. Direction d'essieu arrière pour une grue mobile présentant au moins un essieu arrière à direction active (10) sur lequel sont disposées des roues (22, 24), comprenant :
- un système de direction hydraulique (7-12) comportant un ou plusieurs cylindres de direction hydrauliques (11,12) dont un nombre déterminé est respectivement associé à un essieu arrière à direction active (10) pour diriger cet essieu arrière à direction active (10) de la façon souhaitée,
**caractérisée par** :
- un système de freinage (15) réalisé pour ralentir individuellement chaque roue (22, 24) d'au moins un essieu arrière à direction active (10),
- une unité de commande (16) qui, en cas de défaillance du système de direction hydraulique (7-12), commande le système de freinage (15) de manière que l'essieu arrière (10) puisse être placé dans une position de direction prédéterminée voulue par ralentissement spécifique d'au moins une roue (22, 24) de l'essieu arrière à direction active (10) défaillant.

2. Direction d'essieu arrière pour une grue mobile selon la revendication 1, la grue mobile présentant un essieu arrière à direction active (10) sur lequel sont disposées des roues (22, 24),
**caractérisée en ce qu'**il est associé à un essieu avant dirigé (1) de la grue mobile un capteur d'angle de consigne et à un essieu arrière à direction active (10) un premier capteur d'angle réel ainsi qu'un second capteur d'angle réel assumant la fonction du premier capteur d'angle réel en cas de défaillance de ce dernier.

3. Direction d'essieu arrière pour une grue mobile selon la revendication 1 ou 2,
**caractérisée en ce qu'**il est associé à un essieu avant dirigé (1) de la grue mobile un premier capteur d'angle de consigne ainsi qu'un second capteur d'angle de consigne assumant la fonction du premier capteur d'angle de consigne en cas de défaillance de ce dernier.

4. Direction d'essieu arrière pour une grue mobile selon la revendication 3, la grue présentant au moins deux essieux avant dirigés (1) couplés mécaniquement l'un à l'autre, un premier capteur d'angle de consigne (3) étant associé au premier essieu avant dirigé (1) de la grue mobile et un second capteur d'angle de consigne étant associé au moins à un deuxième essieu avant dirigé (1), une unité de commande (4) étant raccordée aux deux capteurs d'angle de consigne et, en cas de défaillance d'un capteur d'angle de consigne (3), il est fait appel à l'autre capteur d'angle de consigne (3) pour commander un essieu arrière à direction active (10).

5. Direction d'essieu arrière pour une grue mobile selon l'une des revendications 1 à 4,
**caractérisée en ce que** l'unité de commande (4), en cas de défaillance du système de direction hydraulique (7-12), commande le système de freinage (15) par le biais d'un dispositif de commande de manière que l'essieu arrière (10) puisse être placé dans une position de direction prédéterminée voulue, par ralentissement spécifique d'au moins une roue (22, 24) de l'essieu arrière à direction active (10) défaillant.

6. Direction d'essieu arrière pour une grue mobile selon la revendication 5,
**caractérisée en ce que :**
- le dispositif de commande est un dispositif de commande ABS, EBS ou ESR, et
- en cas de défaillance du système de direction hydraulique (7-12), le système de freinage (15) ralentit de façon spécifique, par le biais du dispositif de commande, au moins une roue (22, 24) de l'essieu arrière à direction active (10) défaillant, de manière que l'essieu arrière puisse être placé dans une position de direction prédéterminée voulue, le freinage par commande primaire, tel que le freinage ABS, EBS ou ESR, étant dans ce cas remplacé par le freinage sélectif pour diriger l'essieu arrière (10) défaillant de la façon souhaitée.

7. Direction d'essieu arrière pour une grue mobile selon l'une des revendications précédentes,
**caractérisée en ce qu'**il est associé à chaque essieu arrière à direction active (10) deux cylindres de direction (11, 12).

8. Direction d'essieu arrière pour une grue mobile selon la revendication 7,
**caractérisée en ce que** dans le système de direction hydraulique (7-12) de chaque essieu arrière à direction active (10) un clapet anti-retour (7.2) est installé sur chaque cylindre de direction (11, 12) de cet essieu arrière (10), lequel clapet permet de bloquer le flux de liquide hydraulique en direction de ou en provenance du cylindre de direction (11, 12).

9. Procédé pour diriger un essieu arrière (10) d'une grue mobile sur lequel sont montées des roues (22, 24) et dirigé activement par un système de direction hydraulique (7-12), consistant à :
- détecter une erreur influant sur le processus de direction par le système de direction hydraulique de l'essieu à direction active (10),
**caractérisé en ce qu'**au moins une des roues (22, 24) de l'essieu arrière (10) défaillant est ralentie de façon spécifique, de manière que l'essieu arrière (10) défaillant puisse être placé dans une position de direction prédéterminée voulue.

10. Procédé selon la revendication 9,
**caractérisé en ce qu'**une erreur est détectée lorsqu'on constate une défaillance d'un ordinateur de direction (16) d'un essieu arrière à direction active (10).

11. Procédé selon la revendication 9 ou 10,
**caractérisé en ce qu'**une erreur est détectée lorsqu'on constate une défaillance d'un capteur d'angle réel (6, 18) associé à un essieu arrière à direction active (10).

12. Procédé selon l'une des revendications 9 à 11,
**caractérisé en ce que,** en cas de défaillance d'un ordinateur de direction (16) d'un essieu arrière à direction active (10), un ordinateur de direction (16) d'un autre essieu arrière à direction active (10) assume la fonction de l'ordinateur de direction (16) défaillant.

13. Procédé selon l'une des revendications 9 à 12,
**caractérisé en ce que**, en cas de défaillance d'un ordinateur de direction (16) d'un essieu arrière à direction active (10), un ordinateur de direction (16) d'un autre essieu à direction active (10) assume la commande en vue d'un ralentissement spécifique d'au moins une des roues (22, 24) de l'essieu arrière (10) défaillant de manière que l'essieu arrière (10) défaillant puisse être placé dans une position de direction prédéterminée voulue.
